Europäisches Patentamt

European Patent Office

Office européen des brevets

(19)

(11) Veröffentlichungsnummer: **0 270 765 B1**

(12) **EUROPÄISCHE PATENTSCHRIFT**

(45) Veröffentlichungstag der Patentschrift: **20.03.91**

(51) Int. Cl.⁵: **B65G 53/40, F16K 5/04**

(21) Anmeldenummer: **87114652.8**

(22) Anmeldetag: **07.10.87**

(54) Regelbare Auslaufdüse für pneumatische Dosierförderer.

(30) Priorität: **05.12.86 DE 3641639**

(43) Veröffentlichungstag der Anmeldung:
**15.06.88 Patentblatt 88/24**

(45) Bekanntmachung des Hinweises auf die
Patenterteilung:
**20.03.91 Patentblatt 91/12**

(84) Benannte Vertragsstaaten:
**DE ES FR GB IT**

(56) Entgegenhaltungen:
**DE-C- 1 033 982**
**DE-U- 1 909 475**
**GB-A- 2 122 309**

(73) Patentinhaber: **KRUPP POLYSIUS AG**
**Graf-Galen-Strasse 17**
**W-4720 Beckum(DE)**

(72) Erfinder: **Oskamp, Alfons**
**Goerdeler Strasse 2**
**W-4730 Ahlen 5(DE)**

(74) Vertreter: **Tetzner, Volkmar, Dr.-Ing. Dr. jur.**
**Van-Gogh-Strasse 3**
**W-8000 München 71(DE)**

Rank Xerox (UK) Business Services

EP 0 270 765 B1

## Beschreibung

Die Erfindung betrifft eine regelbare Auslaufdüse entsprechend dem Oberbegriff des Anspruches 1.

Eine regelbare Auslaufdüse entsprechend dem Oberbegriff des Anspruches 1 ist durch die GB-A-2 122 309 bekannt. Bei dieser Auslaufdüse besitzt der die Durchgangsbohrung des Gehäuses mehr oder weniger freigebende Teil des Dosierschiebers den Querschnitt eines Kreissegments, wobei die der Dosierschieberachse zugewandte Fläche des Dosierschiebers eine Ebene bildet, die in der Freigabestellung des Dosierschiebers tangential an die Durchgangsbohrung des Gehäuses anschließt. Die Dosierschieberachse verläuft bei dieser bekannten Ausführung durch die Durchgangsbohrung des Gehäuses. Der Außendurchmesser des Dosierschiebers ist größer als der Durchmesser der Durchgangsbohrung des Gehäuses, jedoch kleiner als der doppelte Wert des Durchmessers dieser Durchgangsbohrung.

Der Erfindung liegt die Aufgabe zugrunde, eine regelbare Auslaufdüse der im Oberbegriff des Anspruches 1 vorausgesetzten Art so auszubilden, daß sie sich durch eine hohe Betriebssicherheit (insbesondere durch Vermeidung einer Verstopfung bei kleinen Durchsatzmengen) sowie durch eine einfache Fertigung auszeichnet.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Ein Ausführungsbeispiel der Erfindung ist in der Zeichnung veranschaulicht. Es zeigen

    Fig. 1    einen Schnitt durch die Auslaufdüse längs der Linie I-I der Fig. 2,

    Fig. 2    einen Schnitt durch die Auslaufdüse längs der Linie II-II der Fig. 1.

Die für einen pneumatischen Feingut-Dosierförderer bestimmte regelbare Auslaufdüse besteht im wesentlichen aus einem Gehäuse 1 und einem in diesem Gehäuse 1 drehbar gelagerten Dosierschieber 2.

Das Gehäuse 1 ist mit einer Durchgangsbohrung 3 für das pneumatisch geförderte Feingut (Pfeil 4) versehen. Der Durchmesser der Durchgangsbohrung 3 ist mit d bezeichnet.

Weiterhin enthält das Gehäuse 1 eine Lagerbohrung 5 zur Aufnahme des Dosierschiebers 2. Die Achse 5a dieser Lagerbohrung 5 verläuft quer zur Achse 3a der Durchgangsbohrung 3 und ist um das Maß a gegenüber dieser Achse versetzt. Dabei entspricht das Maß a dem Radius d/2 der Durchgangsbohrung 3.

Die Welle 2a des Dosierschiebers 2 ist im Gehäuse 1 mittels zweier Kugellager 6, 7 gelagert.

Das antriebsseitige Ende der Welle 2a ist durch einen Lagerdeckel 8 nach außen geführt. Auf der gegenüberliegenden Seite ist die Lagerbohrung 5 durch einen Lagerdeckel 9 verschlossen.

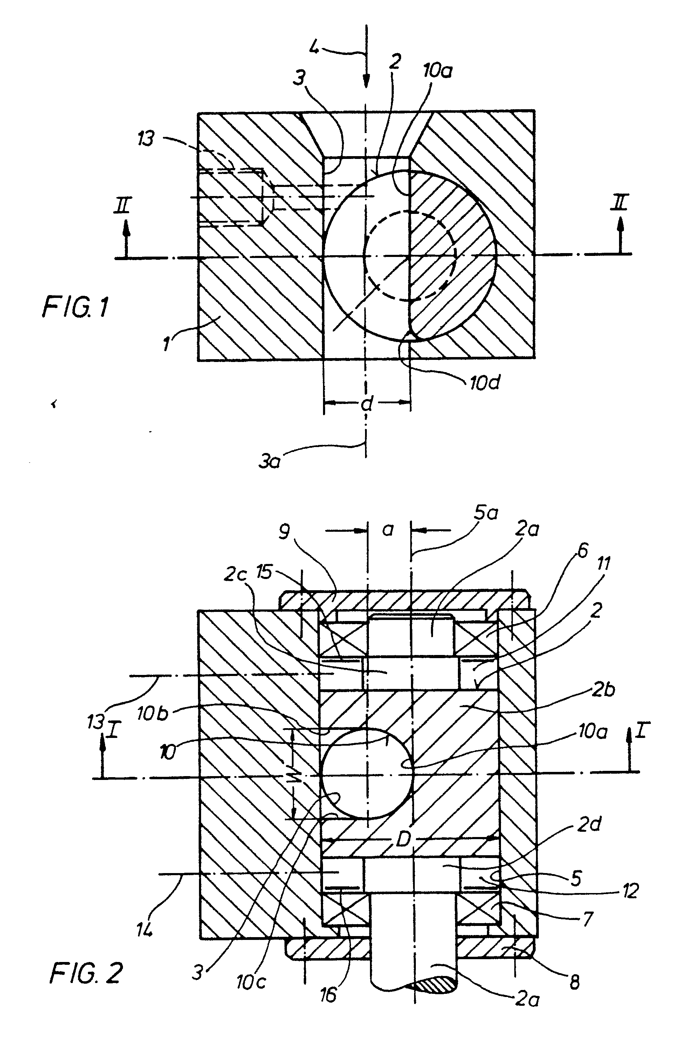

Der Dosierschieber 2 ist mit einer quer und außermittig zur Dosierschieberachse (zusammenfallend mit der Achse 5a der Lagerbohrung 5) verlaufenden Ausnehmung 10 versehen, die - wie Fig. 2 erkennen läßt - durch einen bis zur Achse des Dosierschiebers 2 reichenden, halbzylindrischen Boden 10a und hieran anschließende, parallele Seitenwände 10b, 10c begrenzt wird. Die Ausnehmung 10 besitzt also einen U-förmigen Querschnitt und ist zum Umfang des Dosierschiebers hin offen.

Wie Fig. 2 erkennen läßt, entspricht die Weite W der Ausnehmung 10 dem Durchmesser d der Durchgangsbohrung 3. Der Durchmesser D des die Ausnehmung 10 enthaltenden Mittelteiles 2b des Dosierschiebers 2 entspricht ferner dem doppelten Wert des Durchmessers d der Durchgangsbohrung 3.

Die im Dosierschieber 2 vorgesehene Ausnehmung 10 ist daher so angeordnet und bemessen, daß diese Ausnehmung in der einen Endstellung des Dosierschiebers (in Fig. 1 mit vollen Linien veranschaulicht) mit der im Gehäuse 1 vorgesehenen Durchgangsbohrung 3 fluchtet und diese Durchgangsbohrung damit vollständig freigibt. In der anderen, um 90° versetzten Endstellung sperrt der Dosierschieber 2 dagegen die Durchgangsbohrung 3 vollständig ab. In einer in Fig. 1 gestrichelt angedeuteten Zwischenstellung gibt der Dosierschieber 2 die Durchgangsbohrung 3 teilweise frei.

Die Kante 10d des halbzylindrischen Bodens 10a der Dosierschieber-Ausnehmung 10, die die Gehäuse-Durchgangsbohrung 3 je nach Stellung des Dosierschiebers 2 mehr oder weniger freigibt, ist leicht abgerundet (vgl. Fig. 1), um den Verschleiß an dieser Stelle herabzusetzen.

Zu beiden Seiten des die Ausnehmung 10 enthaltenden Mittelteiles 2b ist der Dosierschieber 2 in den Bereichen 2c und 2d im Durchmesser verringert. Dadurch werden zwischen dem Dosierschieber 2 und dem Gehäuse 1 zwei Ringräume 11 und 12 gebilet, in die im Gehäuse 1 vorgesehene Spülluftkanäle 13 und 14 (in Fig. 2 nur mit ihren Achsen angedeutet) einmünden.

Dichtringe 15, 16 dichten die Kugellager 6, 7 gegenüber den Ringräumen 11 und 12 ab.

Durch die über die Spülluftkanäle 13, 14 während der pneumatischen Feingut-Förderung zugeführte Spülluft wird der Ringspalt zwischen dem Gehäuse 1 und dem Dosierschieber 2 ständig ausgeblasen, was den Verschleiß wesentlich verringert. Zugleich wird durch diese Spülluft eine Verunreinigung der Lager 6 und 7 verhindert.

Das Gehäuse 1 wird aus hochwertigem Stahl und der Dosierschieber 2 werden aus besonders verschleißarmem Werkstoff hergestellt.

Die Steuerung bzw. Regelung der Düse erfolgt durch Verstellung des Dosierschiebers 2 mittels eines handelsüblichen (nicht dargestellten) elektrischen oder pneumatischen Antriebes.

Im Vergleich zu einer bekannten pneumatischen Einschnürdüse besitzt die erfindungsgemäße steuerbare Auslaufdüse einen wesentlich vergrößerten Aussteuer-bzw. Regelbereich (0 % bis 100 %). Der Energieverbrauch ist wesentlich verringert; es wird ferner keine zusätzliche Gasmenge, wie Argon, benötigt. Selbst bei einer Ausführung mit kleinem Durchmesser ist eine Verstopfungsgefahr ausgeschossen. Die Fertigung, Montage und Wartung der Düse ist außerordentlich einfach.

**Ansprüche**

1. Regelbare Auslaufdüse zur Dosierung von Gut, enthaltend
   a) ein Gehäuse (1) mit einer Durchgangsbohrung (3) sowie mit einer quer zu dieser Durchgangsbohrung (3) und axial hierzu versetzt angeordneten Lagerbohrung (5),
   b) einen in der Lagerbohrung (5) des Gehäuses (1) drehbar gelagerten Dosierschieber (2), der in seinem Mittelteil (2b) eine quer und außermittig zur Dosierschieberachse (5a) verlaufende, zum Umfang des Dosierschiebers hin offene, im radialen Querschnitt U-förmige Ausnehmung (10) aufweist und je nach Drehstellung die Durchgangsbohrung (3) mehr oder weniger freigibt, wobei er in seiner ersten Endstellung die Durchgangsbohrung (3) vollständig freigibt und sie in seiner zweiten Endstellung vollständig absperrt, gekennzeichnet durch folgende weitere Merkmale der für pneumatische Feingut-Dosierförderer bestimmten Auslaufdüse:
   c) die Dosierschieber-Ausnehmung (10) wird durch einen halbzylindrischen Boden (10a) und hieran anschließende parallele Seitenwände (10b, 10c) begrenzt, wobei die - in axialer Richtung gemessene - Weite (W) der Ausnehmung (10) dem Durchmesser (d) der zylindrischen Durchgangsbohrung (3) entspricht;
   d) der Außendurchmesser (D) des Dosierschiebers (2) entspricht dem doppelten Wert des Durchmessers (d) der Durchgangsbohrung (3) des Gehäuses (1), wobei die Achse (5a) des Dosierschiebers (2) um den Radius (d/2) dieser Durchgangsbohrung (3) gegenüber der Achse (3a) der Durchgangsbohrung (3) versetzt ist;
   e) der Dosierschieber (2) ist zu beiden Seiten seines die Ausnehmung (10) enthaltenden Mittelteiles (2b) im Durchmesser verringert, wobei in die hierdurch gebildeten zwei Ringräume (11, 12) im Gehäuse (1) vorgesehene Spülluftkanäle (13, 14) einmünden.

2. Auslaufdüse nach Anspruch 1, dadurch gekennzeichnet, daß die Welle (2a) des Dosierschiebers (2) in zwei äußeren Lagern (6, 7) gelagert ist, wobei zwischen diesen Lagern und den mit Spülluft versorgten Ringräumen (11, 12) je ein Dichtungsring (15, 16) angeordnet ist.

3. Auslaufdüse nach Anspruch 1, dadurch gekennzeichnet, daß der halbzylindrische Boden (10a) der Ausnehmung (10) des Dosierschiebers (2) an der die Durchgangsbohrung (3) des Gehäuses (1) mehr oder weniger freigebenden Kante (10d) abgerundet ist.

**Claims**

1. Controllable outlet nozzle for dosaging material, containing
   a) a housing (1) with a through bore (3) and a bearing bore (5) which is arranged transversely and offset axially with respect to the through bore (3),
   b) a dosaging gate valve (2) which is rotatably mounted in the bearing bore (5) of the housing (1) and has in its central part (2b) a recess (10) which is U-shaped in cross-section, runs transversely and eccentrically with respect to the axis (5a) of the dosaging gate valve, is open towards the periphery of the dosaging gate valve and depending upon the rotated position of the dosaging gate valve exposes the through bore (3) to a greater or lesser extent, so that in its first end position is completely exposes the through bore (3) and in its second end position completely shuts it off, characterised by the following further features of the outlet nozzle intended for pneumatic dosaging conveyor for conveying fine material:
   c) the recess (10) in the dosaging gate valve is defined by a semi-cylindrical base (10a) and parallel side walls (10b, 10c) adjoining the latter, and the width (w) of the recess (10) - measured in the axial direction - corresponds to the diameter (d) of the cylindrical through bore (3);
   d) the external diameter (D) of the dosaging gate valve (2) corresponds to twice the value of the diameter (d) of the through bore (3) in the housing (1), and the axis (5a) of the dosaging gate valve (2) is offset by the radius (d/2) of this through bore (3) with respect to the axis (3a) of the through bore (3) in the housing.

e) the dosaging gate valve (2) is reduced in diameter on both sides of its central part (2b) containing the recess (10), and scavenging air channels (13, 14) open into the two annular spaces (11, 12) formed thereby in the housing (1).

2. Outlet nozzle as claimed in claim 1, characterised in that the shaft (2a) of the dosaging gate valve (2) is mounted in two outer bearings (6, 7) and a sealing ring (15, 16) is arranged in each case between these bearings and the annular spaces (11, 12) supplied with scavenging air.

3. Outlet nozzle as claimed in claim 1, characterised in that the semi-cylindrical base (10a) of the recess (10) in the dosaging gate valve (2) is rounded on the edge (10d) which to a greater or lesser extent exposes the through bore (3) in the housing (1).


**Revendications**

1. Vanne-tuyère d'ejection pour le dosage de matière, comprenant:

a) une cage (1) comportant un trou de passage (3) ainsi qu'un alésage (5) qui est perpendiculaire à (3) et dont l'axe est décale par rapport à celui de ce dernier,

b) un tiroir doseur (2) monté rotatif dans l'alésage (5) de la cage (1)et comportant dans sa partie médiane (2b) chambrage (10) de section radiale en étrier transversal et décentré par rapport à l'axe (5a) du tiroir, ouvert vers la circonférence de ce dernier et libérant plus ou moins le trou de passage(3) selon l'orientation du tiroir, ce dernier libérant totalement le trou de passage (3)à sa première position extrême et l'obturant totalerment à sa seconde position extrême. caractérissée par les autres particularités suivantes de la vanne-tuyere d'éjection destinée à un convoyeur doseur pneumatique de poudre:

c) le chambrage (10) du tiroir est délimité par un fond cylindrique (10a) proloné par des parois latérales parallèles (10b,10c), la largeur (W)du chambrage (10) - mesurée dans la direction de l'axe-correspondant au diamètre (d) du trou de passage cylindrique (3);

d) le diamètre extérieur (D) du tiroir-doseur (2) correspond au double du diamètre (d) du trou de passage (3)de la cage (1), l'axe (5a) du tiroir (2) étant décale d'une valeur correspondant au rayon (d/2) de ce trou(3) par rapport à l'axe (3a) de ce même trou de passage (3);

e) le diamètre du tiroir (2) est réduit de part et d'autre de sa partie médiane (2b)qui comporte le chambrage (10), des canaux d'air de balayage (13,14) qui sont prévus dans la cage (1) débouchant dans les deux chambres annulaires (11,12) ainsi formées.

2. Vanne -tuyère selon la revendication 1 caractérisée en ce que la tige (2a) du tiroir (2) est montée dans deux roulements extérieurs (6,7), un joint d'étanchéite (15,16)) étant disposé entre chacun de ces roulements et chacune des chambres annulaires (11,12) alimentées en air de balayage.

3. Vanne-tuyère selon la revendication 1, caractérisé en ce que le fond semi cylindrique (10) du chambrage (10) du tiroir (2) est arrondo le long de l'arrète (10d) qui libère plus ou moins le trou de passage (3) de la cage (1).

FIG.1

FIG.2